# EUROPEAN PATENT APPLICATION

(11) **EP 4 261 954 A1**
(43) Date of publication of application: **18.10.2023**
(21) Application number: 21823333.6
(22) Date of filing: 03.12.2021
(51) Int. Cl.: H01M 4/86, H01M 4/90, H01M 4/96, H01M 12/08, B01J 23/00, B01J 21/18, B01J 23/34, B01J 23/745, B01J 23/889, B01J 35/00, B01J 35/10

(54) **CATALYST AND METAL-AIR BATTERY**

(30) Priority: 09.12.2020 EP 20383075
(71) Applicant: Gnanomat S.L., 28049 Madrid (ES)
(72) Inventor: RUIZ HERRERO, Jose Luis, 47002 VALLADOLID (ES); PEREZ ALONSO, Francisco Jose, 28007 MADRID (ES); RUIZ MARTINEZ-ALCOCER, Sara, 28770 MADRID (ES); SHAN, Tianjing, 28037 MADRID (ES); GARCIA GOMEZ, Alejandra, 28032 MADRID (ES); PEÑA MARTIN, Elisa, 28760 MADRID (ES)
(74) Representative: Igartua, Ismael
(86) International application number: PCT/ES2021/070875
(87) International publication number: WO 2022/123098

(57) **Abstract**

Catalyst (14) that comprises particles that comprise a metal oxide and a carbonaceous material, wherein the metal oxide is an iron oxide or manganese oxide, and the carbonaceous material is a graphenic carbon material. Metal-air battery (10) that comprises a metal electrode (11), an air electrode (13) that comprises the catalyst (14) and an electrolyte (12) disposed between the metal electrode (11) and the air electrode (13).

## Description

### TECHNICAL FIELD

The present invention relates to catalysts and metal-air batteries comprising the same. More specifically, the present invention relates to catalysts that comprise particles that comprise a metal oxide and a carbonaceous material for metal-air batteries.

### PRIOR ART

The development of metal-air battery technologies is a very promising way to obtain energy storage devices with high energy density that can meet the new requirements for a greater autonomy in electric vehicles, in electronic devices and energy storage systems for renewable energy facilities.

The development of this type of metal-air rechargeable batteries, and more specifically Zn-air batteries, is limited by the low efficiency associated with their air electrode, which is due to the low kinetic reaction of the oxygen reduction reaction (ORR) during the discharge and in the oxygen evolution reaction (OER) during the charge of the rechargeable battery.

The document *"*Electrochemical studies of an unsupported Ptlr electrocatalyst as a bifunctional oxygen electrode in a unitized regenerative fuel cell" published in Journal of Power Sources, Volume 191, Issue 2, 15 June 2009, Pages 357-361, describes a bifunctional catalyst based on noble metal mixtures based on Pt for discharge and on an Iridium oxide for charging.

The document "A strongly cooperative spinel nanohybrid as an efficient bifunctional oxygen electrocatalyst for oxygen reduction reaction and oxygen evolution reaction" published in Applied Catalysis B: Environmental 236 (2018), Pages 413-419, describes compounds based on MnFe₂O₄ / NiCo₂O₄.

### DISCLOSURE OF THE INVENTION

The object of the invention is to provide a catalyst for a metal-air battery and a metal-air battery, as defined in the claims.

One aspect of the invention relates to a catalyst that comprises particles that comprise a metal oxide and a carbonaceous material, wherein the metal oxide is an iron oxide or manganese oxide, and the carbonaceous material is a graphenic carbon material.

Another aspect of the invention relates to a metal-air battery that comprises a metal electrode, an air electrode and an electrolyte disposed between the metal electrode and the air electrode, the air electrode comprising the catalyst of the invention.

In general, many catalysts developed so far lack sufficient stability for rechargeable batteries and are based on high-cost noble metals such as platinum or iridium, or on rare materials such as cobalt and/or toxic materials such as nickel.

The present invention has a great advantage in using catalysts based on abundant materials, low-cost and environmentally friendly metals such as iron and manganese, as well as being able to be synthesized by an industrially scalable method.

The present invention has demonstrated the use of such catalysts being active and stable in ORR during discharge and OER during charge.

These and other advantages and features of the invention will become apparent in view of the figures and the detailed description of the invention.

### DESCRIPTION OF THE DRAWINGS

Figure 1 shows a schematic drawing of the metal-air battery of the invention.
Figure 2 illustrates the ORR polarization curve in terms of Faradaic current density by geometric surface area of the electrode (mA/cm²) versus operating voltage of different examples of the catalyst of the invention.
Figure 3 illustrates the OER polarization curve in terms of Faradaic current density by geometric surface area of the electrode (mA/cm₂) versus operating voltage of the catalysts of the examples of Figure 2.
Figure 4 illustrates the results of the accelerated stability test by chronopotentiometry of one of the catalysts of the examples of Figure 2, in charge and discharge regimes of 0.25 A/g and 0.5 A/g, respectively, during 100 successive cycles of 10 minutes duration.

### DETAILED DISCLOSURE OF THE INVENTION

The catalyst 14 of the invention comprises particles that comprise a metal oxide and a carbonaceous material wherein the metal oxide is an iron oxide or a manganese oxide and the carbonaceous material is a graphenic carbon material.

In the context of the invention, the graphenic carbon material includes the graphene and related graphene-based materials described in "All in the graphene family - A recommended nomenclature for two-dimensional carbon materials", CARBON 65 (2013) 1-6.

In a preferred embodiment, the metal oxide is selected from the group consisting of oxide, oxyhydroxide and hydroxide of iron or manganese or a mixture thereof, preferably being selected from the group consisting of Mn₃O₄, MnO₂, MnO(OH), Fe₃O₄, FeO, FeO(OH) and Fe₂O₃ or a mixture thereof.

In a preferred embodiment, the graphenic carbon material is selected from the group consisting of graphene, graphene oxide, multilayer graphene and nanoplatelets of graphene. In one embodiment, the carbonaceous material comprises nanographite.

In a preferred embodiment, the graphenic carbon material has a surface area between 25 and 1500 m²/g, preferably between 25 and 750 m²/g, and more preferably between 400 and 500 m²/g.

With respect to the size of the particle, in a preferred embodiment the size of the particle is between 10 and 300 nm, preferably between 5 and 80 nm.

In the context of the invention, the particle size is designated as the maximum diameter of the particle.

In one embodiment, the weight proportion of the carbonaceous material with respect to the total weight of the catalyst 14 is between 20% and 80%, preferably being about 50%.

In another embodiment, the weight proportion of the metal oxide with respect to the total weight of the catalyst 14 is between 20% and 80%, preferably being about 50%.

The sum of the weight proportion of each component that comprises the catalyst 14 must be 100%.

In one embodiment, the particle comprises a mixture of metal oxides of Mn and Fe. The advantage of this embodiment is that this mixture presents a greater dispersion of the active phase and that the presence of both metals provides a synergistic effect, improving the properties of the catalyst 14 when charging and discharging the battery. Preferably, the weight ratio of Mn with respect to Fe is between 95:5 and 5:95. In one embodiment, the weight proportion of the carbonaceous material with respect to the total weight of the catalyst 14 is 50% and the weight ratio of Mn with respect to Fe is 50:50. In another embodiment, the weight proportion of the carbonaceous material with respect to the total weight of the catalyst 14 is 50%, the weight proportion of the metal oxide with respect to the total weight of the catalyst 14 is 50% and the weight ratio of Mn with respect to Fe is 50:50.

In one embodiment, the particles consist of a metal oxide and a carbonaceous material. To prevent unnecessary repetitions, the features described for the metal oxide, carbonaceous material, and the particle above are considered described also for the respective embodiments depending on this embodiment.

In one embodiment, the catalyst 14 is a bifunctional catalyst.

The catalyst 14 of the invention is suitable for batteries used in stationary energy storage, self-consumption, off grid installations, Uninterruptible Power Supply (UPS) applications, electric fencing, road signs, navigation aid instruments, Internet of Things (IoT) and Telecommunications and parking meters.

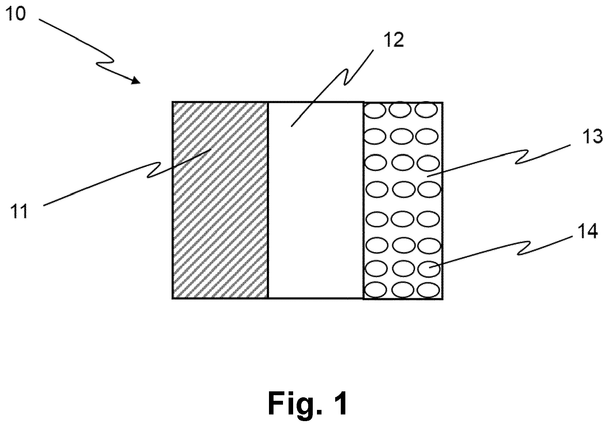

Another aspect of the invention relates to a metal-air battery 10 that comprises a metal electrode or anode 11, an air electrode 13 and an electrolyte 12 disposed between the metal electrode 11 and the air electrode 13, the air electrode 13 of the metal-air battery 10 comprising the catalyst 14 of the invention, as shown in Figure 1.

In one embodiment, the metal electrode 11 is selected from the group consisting of Fe, Zn, Al, Mg, Li and Na, being preferably Zn.

In one embodiment, the electrolyte 12 is an aqueous solution or a gelified electrolyte with a pH greater than 7, preferably between 12 and 14, or a membrane electrolyte that is able to transport hydroxyl groups, as for example the commercially available A201 membrane from Tokuyama which consists of hydrocarbon backbone comprising quaternary ammonium moieties, or membranes based on functionalized polymer backbones as polyvynil alcohol, polysulfones or polytetrafluoroethylene.

In one embodiment, the catalyst 14 amount in the air electrode 13 is between 1 to 50 mg/cm², preferably between 7 to 12 mg/cm².

Several illustrative examples which clearly show the features and advantages of the invention are described below.

### Examples:

### Example 1: Electroreduction of oxygen with MnOx / Graphene catalyst in alkaline medium.

40 g of MnO₂ at 20 I were added to an aqueous solution of malonic acid with a molar ratio 0,1: 6 and the mixture was subjected to vigorous stirring at 60 ° C for about two hours until all the solid material was completely dissolved.

Later, 40 g of graphene nanoplatelets with a nominal surface area of 500 m²/g were added to the previous mixture and the whole was stirred for a further 30 minutes. Subsequently, 8 I of a 5M NaOH aqueous solution was slowly added to the mixture while everything was vigorously stirred with a magnetic bar until pH=11.2 was reached.

Finally, the mixture was vacuum filtered, obtaining a dark material that was washed with distilled water, ethanol and dried in an oven at 100°C. The catalyst of this example is codified as GNM-1.

The electrochemical tests were conducted using an Autolab Pgstat 302 N potentiostat/galvanostat. and a standard three-compartment glass cell with a rotating disk electrode (RDE) as working electrode, a graphite bar and Ag/AgCI as counter and reference electrodes. The catalyst was deposited on a glassy carbon (GC) electrode by means of an ink. A mass of 6 mg of the catalyst, 780 µl Millipore MilliQ^{®} water, 200 µl of isopropyl alcohol and 20 µl of 5 wt.% Nafion were mixed and ultrasonically dispersed to make the ink. A volume of 20 µl of the catalyst ink was deposited onto de GC electrode surface (0.196 cm²) giving a catalyst loading of 0.6 mg_{/}cm².The activity of the catalyst was evaluated by simulating the charge of the battery (oxygen evolution reaction, OER) and simulating the discharge of the battery (oxygen reduction reaction, ORR). The ORR and OER were performed in O₂ saturated 0.1 M KOH at 10 mVs⁻¹ and 1600 rpm by means of a rotating disk electrode. The most relevant parameters obtained from the polarization curves obtained are the mean wave potential (E1/2) for the ORR that was 0.76 V and the operating voltage at a current density of 10 mA /cm² for the OER that was 1.9 V.

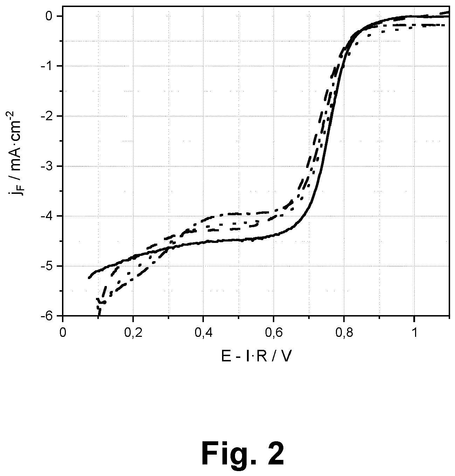

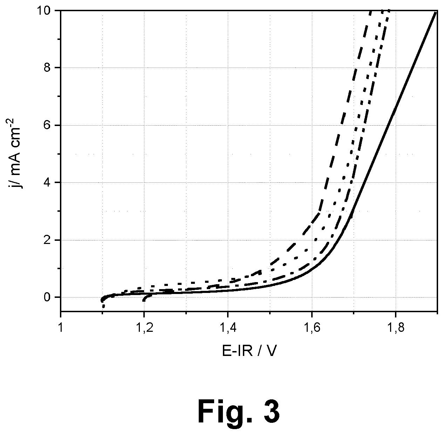

The solid line in Figure 2 and 3 show the polarization curves for the evaluation of GNM-1 performance in the ORR and OER.

### Example 2: Bifunctional catalyst based on a MnOx-FeOx / Graphene nanocomposite for its application on the air electrode of a rechargeable metal-air battery.

25 mg of Mn₃O₄ and 25 mg of Fe₃O₄ were added to 50 ml of an aqueous solution of 0,1M oxalic acid and the mixture was sonicated in an ultrasound bath for approximately two hours, until all the solid material was completely dissolved. Then, 50 mg of graphene nanoplatelets with a nominal surface area of 500 m²/g were added to the previous mixture and the whole was sonicated for a further 30 minutes. Subsequently, 2 mL of a 5M NaOH aqueous solution was slowly added to the mixture while everything was vigorously stirred with a magnetic bar until pH=12.

Finally, the mixture was filtered under vacuum, obtaining a dark-coloured material that was washed with distilled water, ethanol and dried in an oven at 100°C. The catalyst of this example is codified as GNM-4.

The electrochemical tests were conducted using an Autolab Pgstat 302 N potentiostat/galvanostat and a standard three-compartment glass cell with a rotating disk electrode (RDE) (Pine Research Instruments) as working electrode, a graphite bar and Ag/AgCI as counter and reference electrodes similarly to example 1. The catalyst was deposited on a glassy carbon (GC) electrode by means of an ink in the same way that was described in the example 1. The activity of the electrocatalyst was evaluated simulating the charge of the battery (OER) and the discharge of the battery (ORR) in O₂ saturated 0.1 M KOH at 10 mVs⁻¹ and 1600 rpm by means of a rotating disk electrode. The dot line in Figure 2 and 3 show the polarization curves for the evaluation of GNM-4 performance in the ORR and OER.

The most relevant parameters obtained from the polarization curves obtained in the curves are the mean wave potential (E_{1/2}) for the ORR that was 0,75 V and the operating voltage at a current density of 10 mA/cm² for the OER that was 1,77 V.

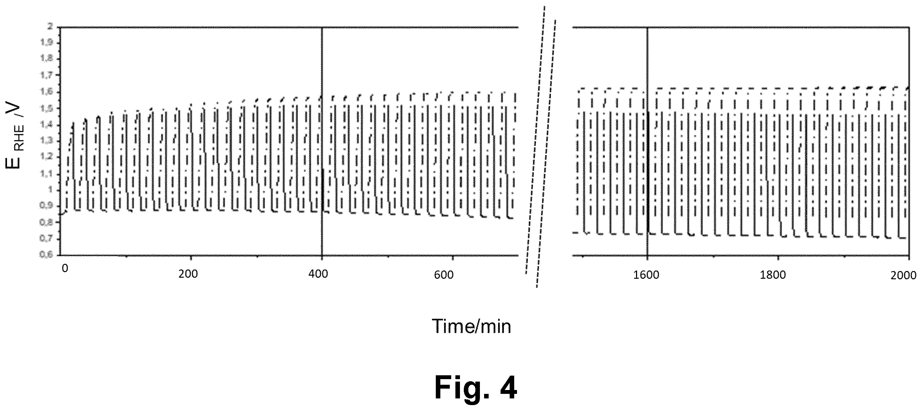

For the analysis of the stability of the performance of the GNM-4 catalyst in a metal-air battery, the battery cycling was simulated by means of an accelerated chronopotentiometry test at different fixed charge and discharge currents. The catalyst was deposited on a glassy carbon (GC) electrode by means of an ink in the same way that was described in the example 1. Specifically, two accelerated tests have been carried out applying a discharge current of 0.5 A/g and a charge current of 0.25 A/g and 0.5 A/g during successive cycles of 10 minutes of duration. Figure 4 illustrates the results of the accelerated stability test by chronopotentiometry of GNM-4 bifunctional catalyst, in charge (dash dot line) and discharge (solid line) regimes of 25 A/g and 05 A/g, during 100 successive cycles of 10 minutes duration.

It can be seen that the GNM-4 catalyst presents good stability to cycling, the potential difference between charge and discharge during the experiment carried out (discharge = 0.5 A/g charge = 0.25 A/g) shows a decrease in voltage efficiency of 1 % after 20 cycles and 12 % after 100 cycles.

### Example 3: Comparison of charging and discharging properties of the bifunctional catalysts of the invention and their comparison with the most relevant materials included in the state of the art

Similarly to examples 1 and 2, the electrochemical tests were conducted using a standard three-compartment glass cell with a RDE as working electrode, a graphite bar and Ag/AgCI as counter and reference electrodes. The catalyst was deposited on a glassy carbon (GC) electrode by means of an ink in the same way that was described in the example 1. The activity of the electrocatalyst was evaluated simulating the charge of the battery (OER) and the discharge of the battery (ORR) in O₂ saturated 0.1 M KOH at 10 mVs⁻¹.

To compare the performance of bifunctional catalysts in the charge (OER) and discharge (ORR) of a metal-air battery, the operating potential at which there is a current density of 10 mA/cm₂ (J₁₀) for OER, the mean wave potential in the ORR in the case of discharge (E_{1/2}) has been measured. The smaller the potential difference between the two values, the better the performance of the bifunctional catalyst and the higher the energy efficiency of the device. To evaluate the stability of the catalysts, the voltage efficiency of discharge/charge (Voltage of discharge/voltage of charge *100) has been evaluated before after cycle 1 and after n cycles.

The following table shows the results of different examples of the catalyst of the invention manufactured following the method described in document ES2678419A1:

| Catalyst | Composition in weight Fe/Mn (%) respect to the total weight of the catalyst | Graphenic material and % in weight respect to the total weight of the catalyst | E_{1/2} (V) (ORR) | J₁₀ (V) (OER) | Number of cycles of charge-discharge tested | Charge/Discharge Voltage efficiency change after n cycles |
|---|---|---|---|---|---|---|
| GNM-1 | 0/50 | Graphene nanoplatelets with nominal surface area of 500 m²/g | 0.76 | 1.9 | 20 | 55 % after first cycle |
| | | | | | | 35 % after 20 cycles |
| | | 50% | | | | |
| GNM-2 | 25/25 | Graphene nanoplatelets with nominal surface area of 750 m²/g | 0.73 | 1.74 | 20 | 56 % after first cycle |
| | | | | | | 36 % after 20 cycles |
| | | 50% | | | | |
| GNM-3 | 0/50 | Graphene nanoplatelets with nominal surface area of 750 m²/g | 0.75 | 1.9 | -- | -- |
| | | 50% | | | | |
| GNM-4 | 25/25 | Graphene nanoplatelets with nominal surface area of 500 m²/g | 0.75 | 1.77 | 100 | 56 % after first cycle |
| | | | | | | 55 % after 20 cycles |
| | | 50% | | | | 44 % after 100 cycles |
| GNM-5 | 10/40 | Graphene nanoplatelets with nominal surface area of 500 m²/g | 0.74 | 1.74 | 20 | 57% after first cycle |
| | | | | | | 43 % after 20 cycles |
| | | 50% | | | | |
| GNM-6 | 40/10 | Graphene nanoplatelets with nominal surface area of 500 m²/g | 0.75 | 1.76 | -- | -- |
| | | 50% | | | | |
| GNM-7 | 25/25 | Graphite platelets with nominal surface area of 400 m²/g | 0.75 | 1.78 | 100 | 56 % after first cycle |
| | | | | | | 55 % after 20 cycles |
| | | 50% | | | | 41 % after 100 cycles |

Figure 2 illustrates the ORR polarization curve in terms of Faradaic current density by geometric surface area of the electrode (mA/cm²) with respect to operating voltage of different catalysts according to one embodiment of the invention GNM1 (solid line), GNM2 (dash line), GNM4 (dot line), GNM7 (dash dot line).

Figure 3 illustrates the OER polarization curve in terms of Faradaic current density by geometric surface area of the electrode (mA/cm²) of the catalysts in Figure 2.

The following table shows the result of different examples according to the invention compared to some catalyst of the state of the art:

| Material | E_{1/2} (V) (ORR) | J₁₀ (V) (OER) | Charge/Discharge Voltage efficiency after 20 cycles | Reference |
|---|---|---|---|---|
| GNM-4 | 0,75 | 1,77 | 56 % after first cycle | |
| | | | 55 % after 20 cycles | |
| GNM-7 | 0,75 | 1,78 | 56 % after first cycle | |
| | | | 55 % after 20 cycles | |
| MnFe2O4/ NiCo2O4 | 0,83 | 1,56 | 60% after first cycle | Applied Catalysis B: Environmental 236 (2018) 413-419418 |
| | | | 59 % after 20 cycles | |
| Ptlr | 0,85 | 1,53 | 47% after first cycle | Journal of Power Sources |
| | | | 35% after 4 cycles | Volume 191, Issue 2, 15 June 2009, |

## Claims

1. Catalyst that comprises particles that comprise a metal oxide and a carbonaceous material, **characterized in that** the metal oxide is an iron oxide or manganese oxide, and the carbonaceous material is a graphenic carbon material.

2. Catalyst according to claim 1, wherein the metal oxide is selected from the group consisting of oxide, oxyhydroxide and hydroxide of iron or manganese or a mixture thereof.

3. Catalyst according to claim 2, wherein the metal oxide is selected from the group consisting of Mn₃O₄, MnO₂, MnO(OH), Fe₃O₄, FeO, FeO(OH) and Fe₂O₃ or a mixture thereof.

4. Catalyst according to any of the preceding claims, wherein the graphenic carbon material is selected from the group consisting of graphene, graphene oxide, multilayer graphene and nanoplatelets of graphene.

5. Catalyst according to any of the preceding claims, wherein the graphenic carbon material has a surface area between 25 and 1500 m²/g, preferably between 400 and 500 m²/g.

6. Catalyst according to any of the preceding claims, wherein the size of the particles is between 10 and 300 nm.

7. Catalyst according to any of the preceding claims, wherein the weight proportion of the carbonaceous material with respect to the total weight of the catalyst is between 20% and 80%, preferably being about 50%.

8. Catalyst according to any of the preceding claims, wherein the weight proportion of the metal oxide with respect to the total weight of the catalyst is between 20% and 80%, preferably being about 50%.

9. Catalyst according to any of the preceding claims, wherein the particle comprises a mixture of metal oxides of Mn and Fe and the weight ratio of Mn with respect to Fe is between 95:5 and 5:95.

10. Catalyst according to claim 9, wherein the weight proportion of the carbonaceous material with respect to the total weight of the catalyst is 50% and the weight ratio of Mn with respect to Fe is 50:50.

11. Catalyst according to any of the preceding claims, wherein the catalyst is a bifunctional catalyst.

12. Metal-air battery that comprises a metal electrode (11), an air electrode (13) and an electrolyte (12) disposed between the metal electrode (11) and the air electrode (13), **characterized in that** the air electrode (13) comprises a catalyst (14) according to any of the preceding claims.

13. Metal-air battery according to claim 12, wherein the metal electrode (11) is selected from the group consisting of Fe, Zn, Al, Mg, Li and Na, preferably Zn.

14. Metal-air battery according to claim 12 or 13, wherein the electrolyte (12) is an aqueous solution or a gelified with a pH greater than 7 or a membrane electrolyte that is able to transport hydroxyl groups.

15. Metal-air battery according to any of claims 12 to 14, wherein the catalyst (14) amount is between 1 to 50 mg/cm².
